# EUROPÄISCHE PATENTSCHRIFT

(11) **EP 2 603 402 B1**
(45) Veröffentlichungstag und Bekanntmachung des Hinweises auf die Patenterteilung: **15.04.2015**
(21) Anmeldenummer: 11743485.2
(22) Anmeldetag: 25.07.2011
(51) Int. Cl.: B60R 1/00

(54) **VERFAHREN ZUM ANZEIGEN VON BILDERN AUF EINER ANZEIGEEINRICHTUNG UND FAHRERASSISTENZSYSTEM**
METHOD FOR DISPLAYING IMAGES ON A DISPLAY UNIT AND DRIVER ASSISTANCE SYSTEM
PROCÉDÉ POUR L'AFFICHAGE D'IMAGES SUR UN DISPOSITIF D'AFFICHAGE ET SYSTÈME D'ASSISTANCE À LA CONDUITE

(30) Priorität: 12.08.2010 DE 102010034140
(43) Veröffentlichungstag der Anmeldung: 19.06.2013
(73) Patentinhaber: Valeo Schalter und Sensoren GmbH, 74321 Bietigheim-Bissingen (DE)
(72) Erfinder: MATHES, Joachim, 74080 Heilbronn (DE); REILHAC, Patrice, 73732Esslingen (DE)
(86) Internationale Anmeldenummer: PCT/EP2011/062699
(87) Internationale Veröffentlichungsnummer: WO 2012/019901

(56) Entgegenhaltungen:
- EP-A2- 1 283 406
- EP-A2- 1 862 376
- EP-B1- 1 065 642
- DE-A1-102008 056 974
- FR-A1- 2 902 381
- US-B1- 6 429 789

## Beschreibung

Die Erfindung betrifft ein Verfahren zum Anzeigen von Bildern auf einer Anzeigeeinrichtung eines Fahrerassistenzsystems in einem Kraftfahrzeug. Die Erfindung betrifft auch ein Fahrerassistenzsystem für ein Kraftfahrzeug; das Fahrerassistenzsystem dient zum Durchführen des Verfahrens.

Anzeigeeinrichtungen für Kraftfahrzeuge sind aus dem Stand der Technik in vielfältiger Ausgestaltung bekannt. Es werden bekanntlich Displays eingesetzt; es können aber auch Bildprojektoren (so genannte Head-up-Displays) verwendet werden, mit denen Bilder auf eine Windschutzscheibe des Kraftfahrzeugs projiziert werden können.

Es ist auch Stand der Technik, optische Kameras am Kraftfahrzeug einzusetzen, die eine Umgebung des Kraftfahrzeugs erfassen. Anhand der Bilddaten der Kameras kann dann ein Umgebungsbild erzeugt werden, welches das Kraftfahrzeug sowie die Umgebung aus einer Vogelperspektive (Bird View) zeigt. Für eine solche perspektivische Darstellung werden die Bilddaten aller Kameras - z.B. Bilddaten von zwei, drei oder vier Kameras - gemischt und zusammen verarbeitet. Ein solches Umgebungsbild kann dann auf der Anzeigeeinrichtung dargestellt werden. Anhand eines derartigen Umgebungsbildes kann der Fahrer dann Rückschlüsse auf die Abstände zwischen dem Kraftfahrzeug und in der Umgebung befindlichen Objekten ziehen. Es können also Kollisionen zwischen dem Kraftfahrzeug und fahrzeugexternen Objekten vermieden werden.

Das Interesse gilt vorliegend insbesondere einem Umgebungsbild, welches anhand von Bilddaten zumindest einer Kamera erzeugt wird und aus einer Vogelperspektive einen Umgebungsbereich neben dem Kraftfahrzeug und vorzugsweise auch zumindest einen Bereich des Kraftfahrzeugs zeigt. Auf diese Weise kann der Umgebungsbereich des Kraftfahrzeugs auf der Anzeigeeinrichtung realitätsgetreu abgebildet werden. Jedoch kann ein solches Umgebungsbild auch anhand von Sensordaten anderer Sensoren erzeugt werden. Beispielsweise können Ultraschalldaten eines Ultraschallsensors zu einem Umgebungsbild verarbeitet werden, welches dann den Umgebungsbereich des Kraftfahrzeugs in schematischer Darstellung zeigt, nämlich beispielsweise mithilfe von schematischen Symbolen beziehungsweise mithilfe von Grundrissen. In gleicher Weise können auch Radardaten eines Radargerätes sowie Daten anderer Sensoren verarbeitet werden.

Außerdem ist bekannt, einen Navigationsempfänger (etwa einen GPS-Empfänger) zum Zwecke der Navigation zu verwenden. Ein solcher Navigationsempfänger empfängt Navigationsdaten (GPS-Daten), und das Fahrerassistenzsystem kann anhand der Navigationsdaten die jeweils augenblickliche globale Position des Kraftfahrzeugs bestimmen. Es kann dann ein schematisches Kartenbild auf der Anzeigeeinrichtung dargestellt werden, welches in schematischer Darstellung das Kraftfahrzeug sowie seine Umgebung zeigt. Ein solches Kartenbild wird also anhand der Navigationsdaten erzeugt, nämlich in Abhängigkeit von der aktuellen globalen Position des Kraftfahrzeugs, derart, dass die momentane globale Position und die Umgebung des Kraftfahrzeugs auf einer Karte gezeigt werden. Ein derartiges Kartenbild wird aus zuvor gespeicherten Kartendaten erzeugt. Diese Kartendaten können entweder in einem Speicher des Fahrerassistenzsystems abgelegt sein oder aber online zur Verfügung stehen, etwa auf einem Host-Server. Ein aus den Kartendaten erzeugtes Bild entspricht quasi einem Bild, wie es aus der Anwendung "Google Maps" (www.maps.google.com) oder aber aus "Google Earth" bekannt ist. Prinzipiell kann dieses Kartenbild auch auf echten optischen Bilddaten beruhen, nämlich auf Satellitenbildern. Diese Daten sind jedoch vorgespeichert und werden nicht wie die oben genannten Bilddaten der am Kraftfahrzeug montierten Kameras in Echtzeit aufgenommen.

Zum Zwecke der Navigation werden also auf der Anzeigeeinrichtung Kartenbilder angezeigt, die auf gespeicherten Kartendaten beruhen und welche unter Berücksichtigung der jeweils augenblicklichen globalen Position des Kraftfahrzeugs erzeugt werden. Dieses Kartenbild beinhaltet also keine echten Informationen über die Umgebung des Kraftfahrzeugs, insbesondere keine Informationen über in der Umgebung befindliche Objekte und Hindernisse. Es wird in der Regel lediglich die Straße und gegebenenfalls das Kraftfahrzeug selbst angezeigt. Auch fehlt es in der Regel an der erforderlichen Auflösung.

In FR 2.902 381 A1 wird eine mit zwei Bildschirmen ausgestattete" Instrumententafel eines Kraftfahrzeugs beschrieben. Der erste Bildschirm ist der Bildschirm von einem klassischen GPS-Fahrzeugnavigationssystems. Der zweite Bildschirm ist ein Bildschirm eines Nachtsicht-Systems mit einer Infrarot-Kamera, die unauffällig vorne im Fahrzeüg integriert

DE 10 2008 056974 A1 offenbart ein Kraftfahrzeugbediensystem mit einem Navigationssystem zum Bereitstellen von Straßenkarten-Informationen, mit einem Fahrzeug-Überwachungs-System zum Bereitstellen von Fahrzeuginformationen, mit einer Anzeigeeinrichtung zur Anzeige von Sraßenkarteninformationen und Fahrzeuginformationen, mit einer Bedieneinrichtung zur Erfassung einer Bedienaktion und mit einer Steuereinrichtung, die derart eingerichtet und mit dem Navigationssystem, dem FahrzeugÜberwachungs-System, der Anzeigeeinrichtung und der Bedieneinrichtung gekoppelt ist, dass in einem Zoombetriebszustand in zumindest einer vorgegebenen Bediensituation oder Zoom-Situation, insbesondere bei der Einstellung des Zoomfaktors auf einen Grenzwert, durch eine weitere Zoom-Bedienaktion vom Zoombetriebszustand auf einen Überwachungsbetriebszustand umgeschaltet wird.

Es ist Aufgabe der Erfindung, eine Lösung aufzuzeigen, wie bei einem Verfahren der eingangs genannten Gattung der Fahrer besonders zuverlässig beim Führen des Kraftfahrzeugs unterstützt werden kann, nämlich insbesondere mithilfe einer einzigen Anzeigeeinrichtung.

Diese Aufgabe wird erfindungsgemäß durch ein Verfahren mit den Merkmalen gemäß Patentanspruch 1 gelöst, wie auch durch ein Fahrerassistenzsystem mit den Merkmalen des Patentanspruchs 14 sowie durch ein Kraftfahrzeug mit den Merkmalen des Patentanspruchs 15. Vorteilhafte Ausführungen der Erfindung sind Gegenstand der abhängigen Patentansprüche und der Beschreibung.

Ein erfindungsgemäßes Verfahren ist zum Anzeigen von Bildern auf einer Anzeigeeinrichtung eines Fahrerassistenzsystems in einem Kraftfahrzeug ausgelegt. Es werden Navigationsdaten durch das Fahrerassistenzsystem empfangen. Zumindest ein Sensor des Fahrerassistenzsystems erfasst Sensordaten über eine Umgebung des Kraftfahrzeugs. Die erfassten Sensordaten werden zu einem Umgebungsbild verarbeitet, welches zumindest einen Umgebungsbereich neben dem Kraftfahrzeug zeigt. Es wird ein Kartenbild auf der Anzeigeeinrichtung angezeigt, welches unter Berücksichtigung der Navigationsdaten aus gespeicherten Kartendaten erzeugt wird. Das Kartenbild wird auf der Anzeigeeinrichtung vergrößert (eingezoomt), und nach Erreichen eines vorbestimmten Abbildungsmaßstabes (Zoomfaktors) des Kartenbildes wird von dem Kartenbild zu dem Umgebungsbild gewechselt.

Ein Grundgedanken der vorliegenden Erfindung besteht somit darin, von dem (schematischen) Kartenbild zu dem (echten) Umgebungsbild - dieses wird anhand der Sensordaten des Sensors erzeugt - dann zu wechseln, wenn beim Vergrößern des Kartenbildes ein vorbestimmter Abbildungsmaßstab erreicht bzw. überschritten wird. Die Erfindung begegnet somit dem Umstand, dass das Kartenbild - dieses wird aus vorab gespeicherten Kartendaten erzeugt - nur eine begrenzte Auflösung bietet und dazu keine tatsächlichen Informationen über die Umgebung des Kraftfahrzeugs beinhaltet. Wird nun das Kartenbild vergrößert bzw. eingezoomt, so ist die Auflösung ab einem bestimmten Abbildungsmaßstab so gering, dass dem Fahrer überhaupt keine Informationen vermittelt werden können. Gerade hier schafft die vorliegende Erfindung eine Abhilfe, indem nach Erreichen des vorgegebenen Abbildungsmaßstabs bzw. einer vorgegebenen Auflösung das Kartenbild zumindest bereichsweise durch das Umgebungsbild ersetzt wird. Es wird also ab einem bestimmten Abbildungsmaßstab nicht mehr das schematische Kartenbild dargestellt, sondern das Umgebungsbild, welches anhand der echten Sensordaten des zumindest einen Sensors erzeugt wird und somit tatsächliche Umgebung des Kraftfahrzeugs abbildet beziehungsweise Informationen über die reale Umgebung beinhaltet. Der Fahrer kann dann beispielsweise Rückschlüsse auf jeweilige Abstände zwischen dem Kraftfahrzeug und in der Umgebung vorhandenen fahrzeugexternen Objekten ziehen und sich über die reale Umgebung des Kraftfahrzeugs informieren.

Auch das Umgebungsbild kann zum Zwecke der Navigation dienen, nämlich nach dem Wechsel der Bilder. Dies bedeutet, dass die Funktion des Navigierens durch das Wechseln der Bilder nicht beeinträchtigt wird, sondern es können dem Fahrer nach wie vor Navigationshinweise mitgeteilt werden. Diese Hinweise können auch in das Umgebungsbild eingeblendet werden.

Die Sensordaten beinhalten Bilddaten, welche durch zumindest eine optische Erfassungseinrichtung bzw. Kamera als einen Sensor erfasst werden. Die optische Erfassungseinrichtung ist eine Kamera, nämlich insbesondere eine solche, die Licht in einem vom Menschen wahrnehmbaren Spektralbereich detektieren kann. Dann können die Sensordaten - Bilddaten - zu einem solchen Umgebungsbild verarbeitet werden, welches eine perspektivische Ansicht des Umgebungsbereichs und auch zumindest eines Bereichs des Kraftfahrzeugs zeigt.

Bei einem weiteren Grundgedanken der vorliegenden Erfindung kann dem Fahrer auf der Anzeigeeinrichtung also ein echtes Bild der Umgebung angezeigt werden, welches anhand von echten Bilddaten einer Kamera erzeugt wird. Dies ist besonders benutzerfreundlich; denn der Fahrer bekommt auf seiner Anzeigeeinrichtung die reale Umgebung des Kraftfahrzeugs abgebildet. Er kann auf der Anzeigeeinrichtung quasi die reale Umgebung des Kraftfahrzeugs betrachten. Anhand der Bilddaten kann nämlich ein Umgebungsbild erzeugt werden, welches die Umgebung des Kraftfahrzeugs realitätsgetreu, und nicht nur schematisch abbildet. Der Einsatz einer optischen Erfassungseinrichtung bzw, Kamera hat den Vorteil, dass das Umgebungsbild mit einer entsprechend hohen Auflösung erzeugt werden kann. Das Umgebungsbild kann dann auf der Anzeigeeinrichtung auch bei einem relativ großen Abbildungsmaßstab mit guter Qualität dargestellt werden.

Weiterhin ist vorgesehen, dass unmittelbar nach dem Wechseln von dem Kartenbild zu dem Umgebungsbild das Umgebungsbild den Umgebungsbereich, und auch den zumindest einen Bereich des Kraftfahrzeugs, aus derselben Blickrichtung und/oder demselben Blickpunkt zeigt, wie das Kartenbild unmittelbar vor dem Wechseln der Bilder. Unter einer "Blickrichtung" wird hier diejenige Richtung verstanden, aus welcher ein virtueller Betrachter beim Betrachten des Bildes blickt. Es wird somit ein kontinuierlicher bzw. ein stetiger Übergang vom Kartenbild zum Umgebungsbild erreicht. Hierdurch wird auch sichergestellt, dass nach dem Wechseln der Bilder zumindest überwiegend derselbe Umgebungsbereich des Kraftfahrzeugs abgebildet wird, wie vor dem Wechseln der Bilder.

Ergänzend oder alternativ können die Sensordaten auch Daten anderer Sensoren umfassen. Zum Beispiel können die Sensordaten auch Ultraschalldaten zumindest eines Ultraschallsensors und/oder Radardaten zumindest eines Radargerätes und/oder Laserdaten zumindest eines Laserscanners beinhalten. Anhand dieser Sensordaten können fahrzeugexterne Objekte in der Umgebung des Kraftfahrzeugs detektiert werden, und in dem Umgebungsbild können dann schematische Symbole dargestellt werden, welche die detektierten Objekte symbolisieren. Der Einsatz dieser Sensoren hat den Vorteil, dass die Verarbeitung der Sensordaten relativ aufwandsarm durchgeführt werden kann und die fahrzeugexternen Objekte dennoch auf der Anzeigeeinrichtung positionsgetreu und maßstabsgetreu bezüglich eines Abbildes des Kraftfahrzeugs dargestellt werden können, nämlich mithilfe von schematischen Symbolen oder Grundrissen.

Im Prinzip kann also das Umgebungsbild aus gemischten Bilddaten einer Kamera und Sensordaten zumindest eines anderen Sensors, zum Beispiel eines Abstandssensors, erzeugt werden. Ein solches Umgebungsbild kann somit sowohl ein optisches Abbild der Umgebung - dieses Abbild beruht dann auf den Bilddaten - als auch schematische Symbole beinhalten, welche in Abhängigkeit von den Sensordaten eines Abstandssensors erzeugt werden.

Nach Erreichen des vorbestimmten Abbildungsmaßstabes wird das Kartenbild zu dem Umgebungsbild gewechselt. Dies bedeutet insbesondere, dass zumindest ein Bereich des Kartenbildes durch einen entsprechenden Bereich des Umgebungsbildes ersetzt wird. Es erweist sich jedoch als besonders vorteilhaft, wenn das gesamte Kartenbild zu dem gesamten Umgebungsbild gewechselt wird.

Unter dem Begriff "Vergrößern" des Bildes wird vorliegend ein "Einzoomen" des Bildes verstanden. Der Begriff "Abbildungsmaßstab" definiert ein Verhältnis zwischen der Größe der optischen Abbildung eines Gegenstandes zu der realen Größe dieses Gegenstandes. Ein Abbildungsmaßstab ist also im Wesentlichen ein Zoomfaktor.

Vorzugsweise ist der Abbildungsmaßstab unmittelbar vor dem Wechseln mit einer Genauigkeit von +/- 5 % gleich dem Abbildungsmaßstab unmittelbar nach dem Wechseln. Mit anderen Worten ist der Abbildungsmaßstab des Umgebungsbildes unmittelbar nach dem Wechseln vorzugsweise im Wesentlichen gleich dem Abbildungsmaßstab des Kartenbildes unmittelbar vor dem Wechseln. Auf diesem Wege gelingt es, nach dem Wechseln der Bilder im Wesentlichen denselben Umgebungsbereich wie vor dem Wechseln abzubilden, so dass keine Umbrüche zwischen den Bildern wahrgenommen werden.

Bevorzugt zeigt das Umgebungsbild von oberhalb des Kraftfahrzeugs eine Draufsicht auf den zumindest einen Bereich des Kraftfahrzeugs und den Umgebungsbereich. Das Umgebungsbild zeigt vorzugsweise eine Draufsicht auf das gesamte Kraftfahrzeug und den Umgebungsbereich um das Kraftfahrzeug herum. Dann kann der Fahrer besonders leicht auf die jeweiligen Abstände zwischen dem Kraftfahrzeug und allen fahrzeugexternen Objekten um das Fahrzeug herum zurück schließen, nämlich anhand des Umgebungsbildes.

Die Sensordaten können beispielsweise fortlaufend erfasst werden, und das Umgebungsbild kann aus den Sensordaten fortlaufend jeweils neu erzeugt werden. Dies bedeutet, dass das Umgebungsbild die Umgebung des Kraftfahrzeugs quasi in Echtzeit abbilden kann.

Im Umgebungsbild wird das Kraftfahrzeug vorzugsweise ortsfest bzw. stationär auf der Anzeigeeinrichtung gezeigt, während das Abbild des Umgebungsbereichs bevorzugt anhand der Sensordaten jeweils neu erzeugt bzw. angepasst wird. Das Abbild des Kraftfahrzeugs kann auch in einer Speichereinrichtung des Fahrerassistenzsystems vorgespeichert sein. Diese Ausführungsform beruht auf der Tatsache, dass der zumindest eine Sensor in der Regel an einer äußeren Oberfläche des Kraftfahrzeugs platziert wird, nämlich beispielsweise an einem Außenbügel oder an einem Stoßfänger, so dass dieser Sensor den Umgebungsbereich des Kraftfahrzeugs, nicht jedoch das Kraftfahrzeug selbst erfassen kann. Das Abbild des Kraftfahrzeugs kann somit in Form von Daten in der Speichereinrichtung abgelegt und dann um das Abbild des Umgebungsbereichs ergänzt werden - nämlich wenn die Sensordaten zur Umgebung vorliegen.

Anhand eines Vergleichs der Navigationsdaten mit den Sensordaten kann auch eine Kalibrierung vorgenommen werden. Und zwar kann die globale Position des Kraftfahrzeugs anhand der Sensordaten korrigiert bzw. auf genaues Maß gebracht werden. Gleichfalls kann auch - ergänzend oder alternativ - eine Blickrichtung, aus welcher das Umgebungsbild den Umgebungsbereich zeigt, anhand der Navigationsdaten korrigiert werden.

Also erfolgt das Wechseln zwischen den Bildern nach Erreichen eines vorbestimmten Abbildungsmaßstabs des Kartenbildes während einer Vergrößerung des Kartenbildes auf der Anzeigeeinrichtung. Das Vergrößern des Kartenbildes und hierdurch das Wechseln zwischen den Bildern können beispielsweise aufgrund einer Eingabe erfolgen, welche eine Bedienperson an einer Eingabeeinrichtung des Fahrerassistenzsystems vornimmt. Beispielsweise kann eine solche Eingabe an einer Bedieneinrichtung vorgenommen werden. Das Fahrerassistenzsystem empfängt dann diese Eingabe und vergrößert aufgrund dieser Eingabe das angezeigte Kartenbild solange, bis der vorbestimmte Abbildungsmaßstab erreicht wird. Wird dieser erreicht, so wechselt das Fahrerassistenzsystem von dem Kartenbild zu dem Umgebungsbild. Diese Ausführungsform hat den Vorteil, dass der Fahrer selbst den Abbildungsmaßstab einstellen kann und somit auch selbst über den Wechsel der Bilder entscheiden kann, nämlich durch Vornahme einer Eingabe. Mit dieser Eingabe wird also quasi eine Angabe zu dem Abbildungsmaßstab bzw. zum Zoomfaktor gemacht.

Anhand der Navigationsdaten kann das Fahrerassistenzsystem auch feststellen, dass das Kraftfahrzeug an einem Zielort angekommen ist bzw. in einen vorbestimmten Bereich um dieses Zielort gelangt ist. Wird durch das Fahrerassistenzsystem festgestellt, dass das Kraftfahrzeug an dem Zielort angekommen ist, so können das Vergrößern des Kartenbildes und hierdurch das Wechseln der Bilder durch das Fahrerassistenzsystem automatisch aufgrund dieser Feststellung vorgenommen werden. Dies bedeutet, dass von dem Kartenbild zum Umgebungsbild dann gewechselt wird, wenn das Kraftfahrzeug an einem vorgegebenen Zielort - dieser kann durch den Fahrer vorgegeben werden - ankommt. Es ist nämlich in der Regel erst an einem Zielort erforderlich, mit dem Kraftfahrzeug - oft auch in sehr engen Verhältnissen - zu rangieren. Gerade dann ist es für den Fahrer sehr vorteilhaft, wenn das Umgebungsbild mit echten Informationen über den Umgebungsbereich auf der Anzeigeeinrichtung angezeigt wird. Der Fahrer kann sich dann an dem Zielort beim Rangieren des Kraftfahrzeugs mit dem Umgebungsbild behelfen; insbesondere kann er anhand des Umgebungsbildes die Hindernisse verfolgen oder aber Rückschlüsse auf die Abstände zwischen den Hindernissen und dem Kraftfahrzeug ziehen.

Durch das Fahrerassistenzsystem kann auch ein fahrzeugexternes Objekt in der Umgebung des Kraftfahrzeugs detektiert werden, nämlich mithilfe einer Sensoreinrichtung des Fahrerassistenzsystems. Diese Sensoreinrichtung kann beispielsweise zumindest einen Abstandssensor, insbesondere einen Ultraschallsensor, umfassen. Sie kann auch den zumindest einen Sensor umfassen, mittels welchem die Sensordaten zur Erzeugung des Umgebungsbildes erfasst werden. Dann können das Vergrößern des Kartenbildes und hierdurch das Wechseln von dem Kartenbild zu dem Umgebungsbild aufgrund der Anwesenheit eines Objektes in der Umgebung des Kraftfahrzeugs erfolgen, nämlich automatisch durch das Fahrerassistenzsystem. Auf diese Weise wird das tatsächliche Umgebungsbild dann eingeblendet, wenn eine Kollision zwischen dem Kraftfahrzeug und dem Objekt einzutreten droht. Der Fahrer kann dann das fahrzeugexterne Objekt auf der Anzeigeeinrichtung sehen und das Kraftfahrzeug entsprechend derart rangieren, dass die Kollision vermieden wird. Dies kann beispielsweise so aussehen, dass von dem Kartenbild zu dem Umgebungsbild dann gewechselt wird, wenn ein Abstand zwischen dem detektierten Objekt und dem Kraftfahrzeug einen vorgegebenen Grenzwert unterschreitet. Diese Ausführungsform sorgt für die Sicherheit der Fahrzeuginsassen; denn der Fahrer bekommt das Umgebungsbild dann angezeigt, wenn es tatsächlich aufgrund der Anwesenheit des fahrzeugexternen Objektes in der Umgebung des Kraftfahrzeugs erforderlich ist.

Das Kartenbild wird aus gespeicherten Kartendaten erzeugt. Das Kartenbild kann z.B. ein schematisches Bild sein, welches in schematischer Darstellung das Kraftfahrzeug und einen Umgebungsbereich neben dem Kraftfahrzeug zeigt. Das Kartenbild kann aber auch ein echtes optisches Bild sein, welches auf vorab gespeicherten Bildern beruht, nämlich beispielsweise auf gespeicherten Satellitenbildern. Die im Kartenbild gezeigte Umgebung des Kraftfahrzeugs entspricht somit nicht dem augenblicklichen Zustand der realen Umgebung. Es können auch wahlweise verschiedene Typen des Kartenbildes bereitgestellt werden, nämlich unterschiedliche Arten der Ansichten. Zum Beispiel können - wie bei der Anwendung "Google Maps" - folgende Ansichtarten bereitgestellt werden: eine Kartenansicht, eine Satellitenansicht und eine 3D-Ansicht.

In einer Ausführungsform ist vorgesehen, dass das Kartenbild durch zumindest einen Bereich des Umgebungsbildes ergänzt wird. Dies bedeutet, dass das Kartenbild auch mit zumindest einem Bereich des Umgebungsbildes überlagert bzw. verdeckt werden kann. Dies kann auch vor Erreichen des vorgegebenen Abbildungsmaßstabs erfolgen. Somit können dem Fahrer bestimmte Informationen angezeigt werden, wie beispielsweise in der Umgebung befindliche Hindernisse und/oder Verkehrszeichen und/oder Ampeln und dergleichen.

Als Umgebungsbild kann bevorzugt wahlweise ein erstes oder ein zweites Umgebungsbild erzeugt und dargestellt werden. Die Wahl zwischen dem ersten und dem zweiten Umgebungsbild kann nach einem vorbestimmten Wahlkriterium erfolgen. Das erste oder das zweite Umgebungsbild können sich untereinander darin unterscheiden, dass das erste Umgebungsbild den Umgebungsbereich bis zu einer größeren Entfernung vom Kraftfahrzeug weg zeigt als das zweite Umgebungsbild. Dem Fahrer können somit wahlweise zumindest zwei Arten des Umgebungsbildes angezeigt werden, nämlich ein Umgebungsbild mit einem größeren Umgebungsbereich neben dem Kraftfahrzeug und ein Umgebungsbild mit einem kleineren Umgebungsbereich neben dem Kraftfahrzeug. Der Fahrer kann somit bedarfsgerecht und situationsabhängig unterstützt werden. Man würde beispielsweise das zweite Umgebungsbild dann anzeigen, wenn die Abstände zwischen dem Kraftfahrzeug und Hindernissen relativ klein sind und der Fahrer relativ schwierige Manöver vorzunehmen hat. Das erste Umgebungsbild würde man hingegen dann anzeigen, wenn es erforderlich ist, sich einen groben Überblick über einen großen Umgebungsbereich neben dem Kraftfahrzeug zu verschaffen.

Bevorzugt zeigt das erste Umgebungsbild den Umgebungsbereich bis zu einer Entfernung von dem Kraftfahrzeug weg, welche in einem Wertebereich von 7 m bis 13 m liegt. Diese Entfernung beträgt vorzugsweise 10 m. Insbesondere zeigt das erste Umgebungsbild also eine Draufsicht auf das gesamte Kraftfahrzeug sowie den Umgebungsbereich um das Kraftfahrzeug herum, nämlich bis zu 10 m vom Kraftfahrzeug weg. Der Fahrer kann sich somit über einen relativ großen Umgebungsbereich informieren und auch solche Hindernisse sehen, die sich relativ weit weg vom Kraftfahrzeug befinden.

Das zweite Umgebungsbild hingegen kann den Umgebungsbereich bis zu einer Entfernung von dem Kraftfahrzeug weg zeigen, welche in einem Wertebereich 50 cm bis 2 m liegt. Diese Entfernung beträgt vorzugsweise 1 m. Anhand eines derartigen Umgebungsbildes kann der Fahrer mit großer Genauigkeit auf die Abstände zwischen dem Kraftfahrzeug und den jeweiligen Hindernissen zurück schließen, die sich unmittelbar neben dem Kraftfahrzeug befinden. Der Fahrer kann somit auch mit seinem Kraftfahrzeug ganz nah an Hindernissen rangieren, ohne eine Kollision zu verursachen.

Wie bereits ausgeführt, erfolgt die Auswahl zwischen dem ersten und dem zweiten Umgebungsbild anhand eines vorbestimmten Wahlkriteriums. Dieses Wahlkriterium kann beispielsweise beinhalten, dass unmittelbar nach dem Wechsel von dem Kartenbild zum Umgebungsbild das erste Umgebungsbild erzeugt und angezeigt wird, also dasjenige Umgebungsbild, welches den Umgebungsbereich bis zur größeren Entfernung vom Kraftfahrzeug weg zeigt als das andere Umgebungsbild. Auf diesem Wege gelingt es, einen stufenlosen Übergang von dem Kartenbild zum Umgebungsbild zu schaffen.

Das Wahlkriterium kann auch zum Inhalt haben, dass dann, wenn anhand der Navigationsdaten ein Ankommen des Kraftfahrzeugs an einem Zielort durch das Fahrerassistenzsystem festgestellt wird, das erste Umgebungsbild erzeugt und angezeigt wird. Kommt das Kraftfahrzeug an einem Zielort an, so wird somit bevorzugt dasjenige Umgebungsbild angezeigt, welches den größeren Umgebungsbereich zeigt. Der Fahrer kann somit am Zielort einerseits Hindernisse im Umgebungsbild wahrnehmen, die sich relativ weit weg vom Kraftfahrzeug befinden; andererseits kann der Fahrer kollisionsfrei mit dem Kraftfahrzeug rangieren.

Das Wahlkriterium kann auch beinhalten, dass dann, wenn durch eine Sensoreinrichtung des Fahrerassistenzsystems ein fahrzeugexternes Objekt in der Umgebung des Kraftfahrzeugs detektiert wird, das zweite Umgebungsbild erzeugt und angezeigt wird, also dasjenige Umgebungsbild, welches den Umgebungsbereich bis zur kleineren Entfernung vom Kraftfahrzeug weg zeigt. Dies kann derart erfolgen, dass das zweite Umgebungsbild dann erzeugt und angezeigt wird, wenn ein Abstand zwischen dem Kraftfahrzeug und dem fahrzeugexternen Objekt einen vorgegebenen Grenzwert unterschreitet. Gerade dann benötigt der Fahrer ein genaues Abbild der Umgebung unmittelbar neben dem Kraftfahrzeug bzw. in unmittelbarer Nähe des Kraftfahrzeugs. Auf diese Weise kann der Fahrer auch in engsten Verhältnissen bzw. in engsten Stellen kollisionsfrei rangieren.

In der Ausführungsform, bei welcher die Sensordaten Bilddaten umfassen, werden die Bilddaten durch zumindest eine optische Erfassungseinrichtung erfasst. Es erweist sich als besonders vorteilhaft, wenn die Bilddaten durch zumindest zwei, insbesondere durch zumindest drei, optische Erfassungseinrichtungen erfasst werden. Es können auch insgesamt vier optische Erfassungseinrichtungen vorgesehen sein. Es können also insgesamt mehrere Erfassungseinrichtung eingesetzt werden, nämlich eine Erfassungseinrichtung an einer linken Seitenflanke und/oder eine Erfassungseinrichtung an einem linken Außenspiegel und/oder eine Erfassungseinrichtung an einer rechten Seitenflanke und/oder eine Erfassungseinrichtung an einem rechten Außenspiegel und/oder eine Erfassungseinrichtung an einem vorderen Stoßfänger und/oder eine an einem hinteren Stoßfänger des Kraftfahrzeugs oder aber an einer Heckklappe. Insgesamt kann durch die Erfassungseinrichtungen ein 360°-Bild der Umgebung um das Kraftfahrzeug herum erfasst werden. Die zumindest eine Erfassungseinrichtung kann beispielsweise eine Kamera sein, nämlich insbesondere eine CMOS-Kamera (Complementary Metal Oxid Semiconductor) oder eine CCD-Kamera (Charge-coupled Device).

Vorzugsweise weist die zumindest eine optische Erfassungseinrichtung einen Erfassungswinkel aus einem Wertebereich von 170° bis 195° auf. Also ist die zumindest eine Erfassungseinrichtung vorzugsweise eine Fischaugenkamera. Auf diesem Wege gelingt es, mit lediglich drei oder vier Erfassungseinrichtungen die gesamte Umgebung um das Kraftfahrzeug herum zu erfassen. Das Fahrerassistenzsystem kommt also mit einer relativ geringen Anzahl der Erfassungseinrichtungen aus.

Erfindungsgemäß wird darüber hinaus ein Fahrerassistenzsystem für ein Kraftfahrzeug bereitgestellt. Das Fahrerassistenzsystem umfasst einen Navigationsempfänger zum Empfangen von Navigationsdaten. Es umfasst auch zumindest einen Sensor zum Erfassen von Sensordaten über eine Umgebung des Kraftfahrzeugs. Eine Anzeigeeinrichtung ist zum Anzeigen von Bildern ausgebildet. Das Fahrerassistenzsystem kann die Sensordaten zu einem Umgebungsbild verarbeiten, welches zumindest einen Umgebungsbereich neben dem Kraftfahrzeug zeigt. Das Fahrerassistenzsystem kann auch ein Kartenbild unter Berücksichtigung der Navigationsdaten aus gespeicherten Kartendaten erzeugen und das Kartenbild auf der Anzeigeeinrichtung anzeigen. Das Fahrerassistenzsystem kann das Kartenbild auf der Anzeigeeinrichtung vergrößern und nach Erreichen eines vorbestimmten Abbildungsmaßstabes des Kartenbildes von dem Kartenbild zu dem Umgebungsbild wechseln.

Ein erfindungsgemäßes Kraftfahrzeug umfasst ein erfindungsgemäßes Fahrerassistenzsystem.

Die mit Bezug auf das erfindungsgemäße Verfahren vorgestellten bevorzugten Ausführungsformen und deren Vorteile gelten entsprechend für das erfindungsgemäße Fahrerassistenzsystem und das Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung eine Draufsicht auf ein Kraftfahrzeug mit einem Fahrerassistenzsystem gemäß einer Ausführungsform der Erfindung;
- Fig. 2: in schematischer Darstellung ein beispielhaftes Kartenbild;
- Fig. 3: in schematischer Darstellung ein beispielhaftes erstes Umgebungsbild;
- Fig. 4: in schematischer Darstellung ein beispielhaftes zweites Umgebungsbild; und
- Fig. 5: ein Flussdiagramm eines Verfahrens gemäß einer Ausführungsform der Erfindung.

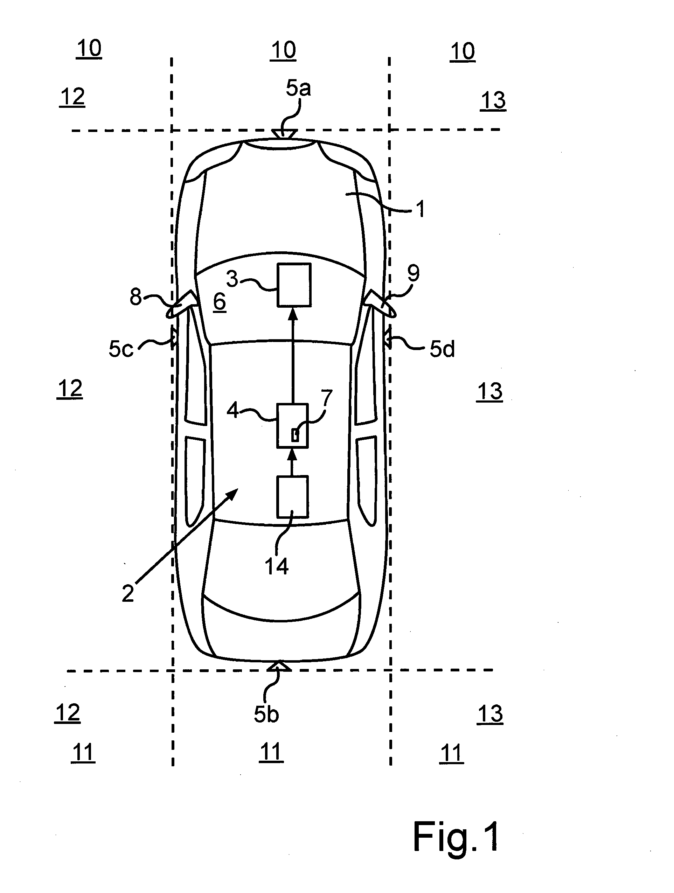

Ein Kraftfahrzeug 1, wie es in Fig. 1 dargestellt ist, ist ein Personenkraftwagen. Das Kraftfahrzeug 1 umfasst ein Fahrerassistenzsystem 2, welches folgende Komponenten umfasst: eine Anzeigeeinrichtung 3, eine Steuereinrichtung 4, vier Kameras 5a bis 5d, wie auch einen Navigationsempfänger 14, z.B. einen GPS-Empfänger. Die Steuereinrichtung 4 steuert die Anzeigeeinrichtung 3 an. Die Kameras 5a bis 5d übermitteln erfasste Bilddaten an die Steuereinrichtung 4, nämlich beispielsweise über einen internen Kommunikationsbus des Kraftfahrzeugs 1. Die Kameras 5a bis 5d sind Sensoren, und die Bilddaten sind Sensordaten im Sinne der vorliegenden Erfindung.

Das Fahrerassistenzsystem 2 kann auch weitere Sensoren zum Erfassen von Sensordaten umfassen, nämlich zumindest einen Ultraschallsensor und/oder zumindest ein Radargerät und/oder zumindest einen Laserscanner.

Die Anzeigeeinrichtung 3 kann beispielsweise ein LCD-Display sein. Sie kann aber auch ein Bildprojektor sein, mittels dessen Bilder auf eine Windschutzscheibe 6 des Kraftfahrzeugs 1 projiziert werden können (ein Head-up-Display).

In der Steuereinrichtung 4, nämlich in einem Speicher 7, ist ein Abbild des Kraftfahrzeugs 1 abgespeichert, und genauer gesagt Daten, die ein Abbild des Kraftfahrzeugs 1 repräsentieren.

Die Kameras 5a bis 5d sind an einer äußeren Oberfläche des Kraftfahrzeugs 1 angebracht. Die Anzahl sowie die Anordnung der Kameras 5a bis 5d ist in Fig. 1 lediglich beispielhaft dargestellt; je nach Ausführungsform kann die Anzahl der Kameras 5a bis 5d sowie deren Anordnung an dem Kraftfahrzeug 1 variieren. Im Ausführungsbeispiel ist eine erste Kamera 5a an einem vorderen Stoßfänger des Kraftfahrzeugs 1 angeordnet, während eine zweite Kamera 5b an einem hinteren Stoßfänger oder aber an einer Heckklappe angeordnet ist. Eine dritte Kamera 5c ist an der linken Seitenflanke angebracht; sie kann auch in einen linken Außenspiegel 8 integriert sein. Eine vierte Kamera 5d ist an der rechten Seitenflanke angebracht, nämlich im Bereich eines rechten Außenspiegels 9. Auch die vierte Kamera 5d kann in den Außenspiegel 9 integriert sein.

Die Kameras 5a bis 5d weisen jeweils einen breiten Erfassungswinkel auf und sind somit so genannte Fischaugenkameras. Zum Beispiel kann der jeweilige Erfassungswinkel in einem Wertebereich von 170° bis 195° liegen. Wie aus Fig. 1 hervorgeht, erfasst die erste Kamera 5a einen Bereich 10 vor dem Kraftfahrzeug 1, während die zweite Kamera 5b einen Bereich 11 hinter dem Kraftfahrzeug 1 erfasst. Entsprechend erfasst die dritte Kamera 5c einen Bereich 12 links neben dem Kraftfahrzeug 1; die vierte Kamera 5d erfasst einen Bereich 13 rechts neben dem Kraftfahrzeug 1. Die Kameras 5a bis 5d können also im Wesentlichen die gesamte Umgebung um das Kraftfahrzeug 1 herum erfassen, nämlich ein 360°-Bild.

Die Steuereinrichtung 4 kann die durch die Kameras 5a bis 5d erfassten Bilddaten verarbeiten. Die Steuereinrichtung 4 kann anhand der Bilddaten ein Bild erzeugen, welches von oberhalb des Kraftfahrzeugs 1 eine Draufsicht auf die Umgebung des Kraftfahrzeugs 1 zeigt, nämlich auf die Erfassungsbereiche 10 bis 13. Die Steuereinrichtung 4 kann also aus den Bilddaten ein Bild erzeugen, welches aus einer Vogelperspektive eine Draufsicht auf die Erfassungsbereiche 10 bis 13 zeigt.

Wie bereits ausgeführt, ist in dem Speicher 7 ein Abbild des Kraftfahrzeugs 1 abgespeichert. Auch dieses Abbild zeigt das Kraftfahrzeug 1 aus einer Vogelperspektive; dieses Abbild zeigt mit anderen Worten eine Draufsicht auf das Kraftfahrzeug 1 von oberhalb desselben. Die Steuereinrichtung 4 kann aus dem Abbild des Kraftfahrzeugs 1 und dem anhand der Bilddaten erzeugten Abbild der Umgebung ein Umgebungsbild erzeugen, welches eine Draufsicht sowohl auf das Kraftfahrzeug 1 als auch auf die Umgebung um das Kraftfahrzeug 1 herum zeigt, nämlich aus einer Vogelperspektive. In einem einzigen Umgebungsbild werden somit sowohl die Umgebung des Kraftfahrzeugs 1 als auch das Kraftfahrzeug 1 selbst aus einer Vogelperspektive dargestellt. Dieses Umgebungsbild kann die Steuereinrichtung 4 auf der Anzeigeeinrichtung 3 anzeigen. Dieses Umgebungsbild kann kontinuierlich angezeigt werden; dies bedeutet, dass sich das Umgebungsbild fortlaufend bzw. dynamisch an die Umgebung des Fahrzeugs 1 anpassen kann. Die Bilddaten werden nämlich fortlaufend durch die Kameras 5a bis 5d erfasst, und das Umgebungsbild wird aus den kontinuierlich erfassten Bilddaten jeweils neu erzeugt. In dem Umgebungsbild kann das Kraftfahrzeug 1 ortsfest bzw. stationär gezeigt werden, während das Abbild der Umgebung stets aktualisiert und angepasst werden kann.

Das Umgebungsbild kann die Steuereinrichtung 4 auch unter Berücksichtigung von Sensordaten anderer Sensoren, nämlich des zumindest einen Ultraschallsensors und/oder des zumindest einen Radargeräts und/oder des zumindest einen Laserscanners. Beispielsweise können schematische Symbole in das Umgebungsbild eingeblendet werden, welche in Abhängigkeit von diesen Sensordaten erzeugt werden und fahrzeugexterne Objekte symbolisieren, die anhand der Sensordaten in der Umgebung des Kraftfahrzeugs 1 detektiert werden.

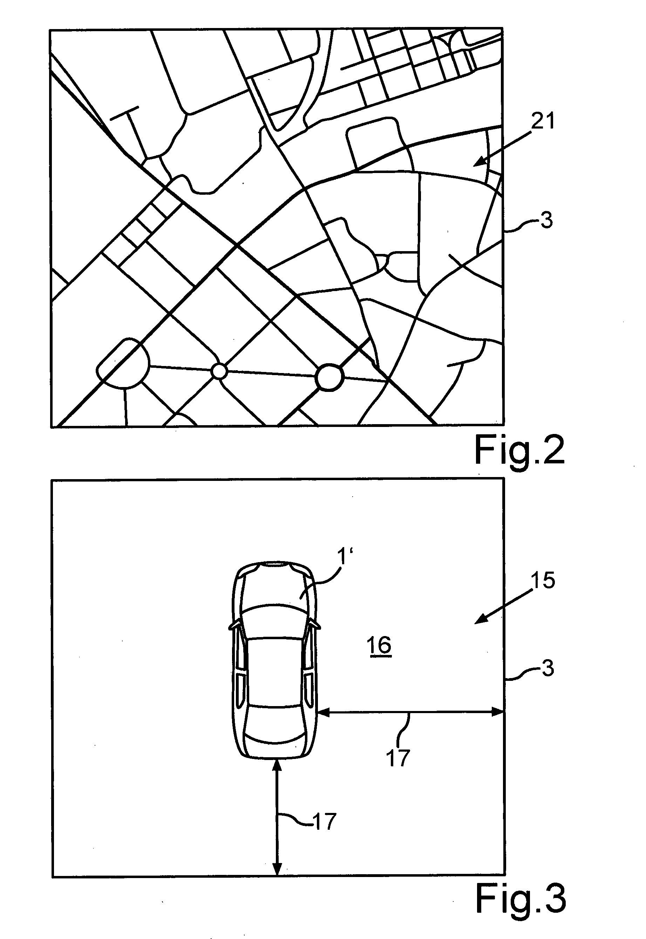

Im Ausführungsbeispiel kann die Steuereinrichtung 4 prinzipiell zwei verschiedene Umgebungsbilder erzeugen, nämlich aus den Bilddaten der Kameras 5a bis 5d und gegebenenfalls auch weiteren Sensordaten. Und zwar kann die Steuereinrichtung 4 ein erstes Umgebungsbild erzeugen, wie es in schematischer Darstellung in Fig. 3 beispielhaft gezeigt und mit 15 bezeichnet ist. Das erste Umgebungsbild 15 kann auf der Anzeigeeinrichtung 3 angezeigt werden. Das erste Umgebungsbild 15 zeigt aus einer Vogelperspektive eine Draufsicht auf das Kraftfahrzeug 1' sowie auf einen Umgebungsbereich 16 um das Kraftfahrzeug 1' herum. Obwohl in Fig. 3 nicht näher dargestellt, wird im Umgebungsbild 15 der reale Umgebungsbereich 16 abgebildet bzw. realitätsgetreu dargestellt. Dies, weil die Kameras 5a bis 5d die reale Umgebung um das Kraftfahrzeug 1 herum erfassten und die Steuereinrichtung 4 das Umgebungsbild 15 in Echtzeit aus den Bilddaten jeweils neu erzeugt. Das erste Umgebungsbild 15 zeichnet sich dadurch aus, dass es den Umgebungsbereich 16 bis zu einer Entfernung 17 vom Kraftfahrzeug 1' weg zeigt, die in einem Wertebereich von 7 m bis 13 m liegt. Das erste Umgebungsbild 15 kann den Umgebungsbereich 16 seitlich neben dem Kraftfahrzeug 1' bis zu einer Entfernung 17 von 10 m oder 11 m zeigen, während der Umgebungsbereich 16 hinter und vor dem Kraftfahrzeug 1' bis zu einer Entfernung 17 von 8 m oder 9 m gezeigt werden kann. Im Vergleich zu bekannten vogelperspektivischen Bildern zeigt das erste Umgebungsbild 15 also einen erweiterten Umgebungsbereich 16, welcher sich bis zu einer relativ großen Entfernung 17 vom Kraftfahrzeug 1' weg erstreckt.

Das erste Umgebungsbild 15 kann im Prinzip auf zwei verschiedene Art und Weisen erzeugt werden: Zum einen können ausschließlich die jeweils augenblicklich bzw. momentan erfassten Bilddaten zur Erzeugung des Umgebungsbilder 15 herangezogen werden. Alternativ - wenn der Umgebungsbereich 16 bis zur Entfernung 17 nicht erfasst werden kann - kann das Umgebungsbild 15 sowohl aus den momentan erfassten Bilddaten als auch aus zuvor erfassten Bilddaten erzeugt werden. Gemäß dieser Alternative kann also das Umgebungsbild 15 mittels einer Odometrie erzeugt werden.

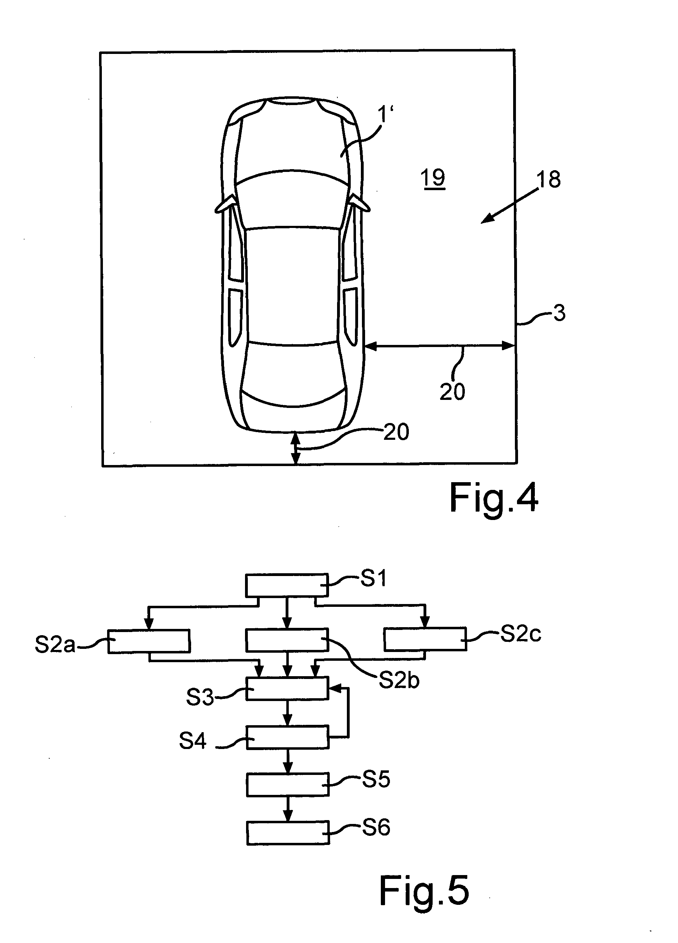

Die Steuereinrichtung 4 kann außerdem ein zweites Umgebungsbild 18 erzeugen, wie es beispielhaft und in schematischer Darstellung in Fig. 4 gezeigt ist. Auch dieses zweite Umgebungsbild 18 zeigt aus einer Vogelperspektive eine Draufsicht auf das Kraftfahrzeug 1' sowie einen Umgebungsbereich 19 um das Kraftfahrzeug 1' herum. Auch das Umgebungsbild 18 zeigt ein reales Abbild des Umgebungsbereichs 19, obwohl in Fig. 4 dies nicht explizit dargestellt ist. Wie aus Fig. 4 hervorgeht, ist das Abbild des Kraftfahrzeugs 1' in Fig. 4 größer als das Abbild des Kraftfahrzeugs 1' im ersten Umgebungsbild 15 gemäß Fig. 3. Dies liegt darin, dass das zweite Umgebungsbild 18 den Umgebungsbereich 19 nur bis zu einer geringeren Entfernung 20 vom Kraftfahrzeug 1' weg zeigt. Diese Entfernung 20 kann beispielsweise in einem Wertebereich von 50 cm bis 2 m liegen. Zum Beispiel kann das zweite Umgebungsbild 18 den Umgebungsbereich 19 seitlich neben dem Kraftfahrzeug 1' bis zu einer Entfernung 20 von 1,5 m zeigen, während der Umgebungsbereich 19 hinter und vor dem Kraftfahrzeug 1' bis zu einer Entfernung 20 von 50 cm gezeigt werden kann. Anhand des zweiten Umgebungsbildes 18 kann der Fahrer also mit hoher Genauigkeit jeweilige Abstände zwischen dem Kraftfahrzeug 1 und im Umgebungsbereich 19 vorhandenen fahrzeugexternen Hindernissen ermitteln.

Auf der Anzeigeeinrichtung 3 können das erste und das zweite Umgebungsbild 15, 18 wahlweise dargestellt werden, d.h. es kann entweder das erste Umgebungsbild 15 oder das zweite Umgebungsbild 18 dargestellt werden.

Wie bereits ausgeführt, beinhaltet das Fahrerassistenzsystem 2 auch einen Navigationsempfänger 14, hier einen GPS-Empfänger, welcher Navigationsdaten (GPS-Daten) empfängt. Diese Navigationsdaten beinhalten Informationen über die globale Position des Kraftfahrzeugs 1; dies bedeutet, dass die Steuereinrichtung 4 anhand der Navigationsdaten auf die jeweils augenblickliche globale Position des Kraftfahrzeugs 1 zurück schließen kann. In Abhängigkeit von der aktuellen globalen Position des Kraftfahrzeugs 1 kann die Steuereinrichtung 4 auch ein Kartenbild 21 erzeugen und auf der Anzeigeeinrichtung 3 darstellen. Ein beispielhaftes Kartenbild 21 ist in Fig. 2 in schematischer Darstellung gezeigt. Die Steuereinrichtung 4 kann das Kartenbild 21 aus gespeicherten Kartendaten erzeugen, die beispielsweise in dem Speicher 7 der Steuereinrichtung 4 abgelegt oder aber online zur Verfügung gestellt werden können. Das Kartenbild 21 zeigt die jeweils augenblickliche globale Position des Kraftfahrzeugs 1, wie auch die durch das Kraftfahrzeug 1 befahrene Straße und gegebenenfalls auch weitere Straßen sowie weitere in der Umgebung des Kraftfahrzeugs 1 vorhandene Einrichtungen und Gebäuden. Das Kartenbild 21 ist ebenfalls ein Luftbild, d.h. es zeigt die Umgebung des Kraftfahrzeugs 1 aus einer Vogelperspektive. Das Kartenbild 21 zeigt jedoch nicht die reale Umgebung des Kraftfahrzeugs 1 bzw. nicht den augenblicklichen tatsächlichen Zustand der Umgebung. Dies aus dem Grund, weil das Kartenbild 21 auf gespeicherten Kartendaten beruht, die nicht in Echtzeit erzeugt werden. Das Kartenbild 21 kann gegebenenfalls auch auf Satellitenbildern beruhen, die als vorgespeicherte Bilddaten in dem Speicher 7 abgelegt werden können.

Das Kartenbild 21 bietet jedoch nicht die gewünschte Auflösung, insbesondere nicht dann, wenn dieses Kartenbild 21 auf der Anzeigeeinrichtung 3 deutlich vergrößert werden soll. Wird das Kartenbild 21 - beispielsweise aufgrund einer Eingabe des Fahrers - bis zu einem relativ großen Abbildungsmaßstab bzw. Zoomfaktor eingezoomt, so ist die Auflösung 21 so gering, dass der Fahrer mit dem Kartenbild 21 relativ wenig anfangen kann. Außerdem beinhaltet das Kartenbild 21 keine tatsächlichen Informationen über die reale augenblickliche Umgebung des Kraftfahrzeugs 1. Zum Beispiel können im Kartenbild 21 keine in der Umgebung momentan befindlichen Hindernisse angezeigt werden. Es ist somit im Ausführungsbeispiel vorgesehen, dass beim Vergrößern bzw. beim Einzoomen des Kartenbildes 21 nach Erreichen eines vorbestimmten Abbildungsmaßstabes (Zoomfaktors) bzw. einer vorbestimmten Auflösung von dem Kartenbild 21 zu einem der Umgebungsbilder 15, 18 übergegangen wird. Dann bekommt der Fahrer ein Umgebungsbild 15, 18 auf der Anzeigeeinrichtung 3 angezeigt, welches einerseits eine deutlich bessere Auflösung als das Kartenbild 21 aufweist und andererseits realitätsgetreue Informationen über die augenblickliche Umgebung des Kraftfahrzeugs 1 beinhaltet.

Bezugnehmend auf Fig. 5 wird nachfolgend ein Verfahren gemäß einer Ausführungsform der Erfindung näher erläutert. Das Verfahren beginnt in einem ersten Schritt S1, in welchem die Steuereinrichtung 4 ein Kartenbild 21 aus gespeicherten Karten erzeugt und auf der Anzeigeeinrichtung 3 anzeigt. Das Kartenbild 21 zeigt die aktuelle globale Position des Kraftfahrzeugs 1 auf einer Karte.

In einem nachfolgenden Schritt überprüft die Steuereinrichtung 4, ob das Kartenbild 21 auf der Anzeigeeinrichtung 3 eingezoomt bzw. vergrößert werden soll oder nicht. Und zwar überprüft die Steuereinrichtung 4 in einem Schritt S2a, ob eine Eingabe zur Vergrößerung des Kartenbildes 21 durch eine Bedienperson vorgenommen wird oder nicht, nämlich an einer Eingabeeinrichtung des Fahrerassistenzsystems 2. Parallel bzw. gleichzeitig überprüft die Steuereinrichtung 4 in einem Schritt S2b, ob das Kraftfahrzeug 1 an einem vorgegebenen Zielort - beispielsweise in einer vorgegebenen Stadt oder aber in einer vorgegebenen Straße - angekommen ist. Parallel bzw. gleichzeitig überprüft die Steuereinrichtung 4 - nämlich im Schritt S2c -, ob ein fahrzeugexternes Objekt in einen vorgegebenen Umgebungsbereich des Kraftfahrzeugs 1 gelangt ist.

Wird eine Eingabe zur Vergrößerung des Kartenbildes 21 erkannt und/oder ist das Kraftfahrzeug 1 am Zielort angekommen und/oder wird ein Objekt im vorgegebenen Umgebungsbereich des Kraftfahrzeugs 1 detektiert, so wird das Kartenbild 21 auf der Anzeigeeinrichtung 3 durch die Steuereinrichtung 4 vergrößert bzw. gezoomt. Das Vergrößern erfolgt im Schritt S3. In einem nachfolgenden Schritt S4 überprüft die Steuereinrichtung 4, ob ein vorgegebener Abbildungsmaßstab des Kartenbildes 21 bzw. eine vorgegebene Auflösung erreicht wurde oder nicht. Ist der vorgegebene Abbildungsmaßstab noch nicht erreicht, so kehrt das Verfahren zum Schritt S3 zurück, und das Kartenbild 21 wird weiterhin vergrößert. Wird im Schritt S4 der vorgegebene Abbildungsmaßstab erreicht, so erfolgt in einem nachfolgenden Schritt S5 eine Auswertung eines Wahlkriteriums, nach welchem zwischen dem ersten Umgebungsbild 15 oder dem zweiten Umgebungsbild 18 ausgewählt wird. Das ausgewählte Bild wird dann im Schritt S6 auf der Anzeigeeinrichtung 3 angezeigt; es erfolgt ein Wechsel von dem Kartenbild 21 zu dem Umgebungsbild 15 oder 18.

Das Wahlkriterium hat zum Inhalt, dass:
- im Schritt S6 von dem Kartenbild 21 zunächst zum ersten Umgebungsbild 15 dann übergegangen wird, wenn das Vergrößern des Kartenbildes 21 aufgrund einer Eingabe der Fahrers erfolgt, und/oder
- von dem Kartenbild 21 zu dem ersten Umgebungsbild 15 dann übergegangen wird, wenn das Vergrößern des Kartenbildes 10 aufgrund des Ankommens des Kraftfahrzeugs 1 am Zielort erfolgt, und/oder
- von dem Kartenbild 21 direkt zum zweiten Umgebungsbild 18 oder mittelbar über das Umgebungsbild 15 zum zweiten Umgebungsbild 18 dann gewechselt wird, wenn ein fahrzeugexternes Objekt im vorgegebenen Umgebungsbereich des Kraftfahrzeugs 1 detektiert wird.

Allgemein kann auch gelten, dass von dem Kartenbild 21 zu dem zweiten Umgebungsbild 18 nur mittelbar über das erste Umgebungsbild 15 übergegangen werden kann, so dass ein stetiger bzw. kontinuierlicher Übergang zwischen den Bildern stattfindet.

Beim Übergang von dem Kartenbild 21 zu den Umgebungsbildern 15, 18 wird auch darauf geachtet, dass unmittelbar nach dem Wechseln das Umgebungsbild 15, 18 aus derselben Blickrichtung und demselben Blickpunkt gezeigt wird, wie das Kartenbild 21 unmittelbar vor dem Wechseln. Es kann auch vorgesehen sein, dass unmittelbar nach dem Wechseln die Entfernung, bis zu welcher der Umgebungsbereich vom Kraftfahrzeug 1 weg gezeigt wird, gleich der Entfernung unmittelbar vor dem Wechseln ist. Auf diese Weise kann ein kontinuierlicher bzw. stetiger und stufenfreier Übergang zwischen den Bildern erreicht werden.

## Patentansprüche

1. Verfahren zum Anzeigen von Bildern (15, 18, 21) auf einer Anzeigeeinrichtung (3) eines Fahrerassistenzsystems (2) in einem Kraftfahrzeug (1), mit den Schritten:
- Empfangen von Navigationsdaten durch das Fahrerassistenzsystem (2),
- Erfassen von Sensordaten über eine Umgebung (10 bis 13) des Kraftfahrzeugs (1) durch zumindest einen Sensor (5a bis 5d) des Fahrerassistenzsystems (2),
- Verarbeiten der Sensordaten zu einem Umgebungsbild (15, 18), welches zumindest einen Umgebungsbereich (16, 19) neben dem Kraftfahrzeug (1) zeigt,
- Anzeigen eines Kartenbildes (21) auf der Anzeigeeinrichtung (3), welches unter Berücksichtigung der Navigationsdaten aus gespeicherten Kartendaten erzeugt wird, und
- Vergrößern des Kartenbildes (21) auf der Anzeigeeinrichtung (3) und nach Erreichen eines vorbestimmten Abbildungsmaßstabs des Kartenbildes (21) Wechseln von dem Kartenbild (21) zu dem Umgebungsbild (15, 18),
- **dadurch gekennzeichnet, dass**
die Sensordaten Bilddaten umfassen, welche durch zumindest eine Kamera (5a bis 5d) als einen Sensor erfasst werden, wobei die Bilddaten zum Umgebungsbild (15, 18) verarbeitet werden, welches eine perspektivische Ansicht des Umgebungsbereichs (16, 19) und auch zumindest eines Bereichs des Kraftfahrzeugs (1') zeigt, und dass unmittelbar nach dem Wechseln von dem Kartenbild (21) zu dem Umgebungsbild (15, 18) das Umgebungsbild (15, 18) den Umgebungsbereich (16, 19), und auch den zumindest einen Bereich des Kraftfahrzeugs (1'), aus derselben Blickrichtung zeigt, wie das Kartenbild (21) unmittelbar vor dem Wechseln.

2. Verfahren nach Anspruch 1,
**dadurch gekennzeichnet, dass**
die Sensordaten Ultraschalldaten, welche durch zumindest einen Ultraschallsensor erfasst werden, und/oder Radardaten, welche durch zumindest ein Radargerät als einen Sensor erfasst werden, und/oder Laserdaten umfassen, welche durch zumindest einen Laserscanner als einen Sensor erfasst werden.

3. Verfahren nach einem der vorhergehenden Ansprüche,
**dadurch gekennzeichnet, dass**
das Umgebungsbild (15, 18) von oberhalb des Kraftfahrzeugs (1) eine Draufsicht auf zumindest einen Bereich des Kraftfahrzeugs (1') und den Umgebungsbereich (16, 19), insbesondere eine Draufsicht auf das gesamte Kraftfahrzeug (1') und den Umgebungsbereich (16, 19) um das Kraftfahrzeug (1) herum, zeigt.

4. Verfahren nach einem der vorhergehenden Ansprüche,
**dadurch gekennzeichnet, dass**
das Vergrößern des Kartenbildes (21) und hierdurch das Wechseln der Bilder (15, 18, 21) aufgrund einer Eingabe erfolgt, welche eine Bedienperson an einer Eingabeeinrichtung des Fahrerassistenzsystems (2) vornimmt.

5. Verfahren nach einem der vorhergehenden Ansprüche,
**dadurch gekennzeichnet, dass**
anhand der Navigationsdaten ein Ankommen des Kraftfahrzeugs (1) an einem Zielort durch das Fahrerassistenzsystem (2) festgestellt wird und das Vergrößern des Kartenbildes (21) und hierdurch das Wechseln der Bilder (15, 18, 21) durch das Fahrerassistenzsystem (2) aufgrund dieser Feststellung vorgenommen wird.

6. Verfahren nach einem der vorhergehenden Ansprüche,
**dadurch gekennzeichnet, dass**
durch eine Sensoreinrichtung des Fahrerassistenzsystems (2) ein fahrzeugexternes Objekt in der Umgebung (10 bis 13) detektiert wird und das Vergrößern des Kartenbildes (21) und hierdurch das Wechseln der Bilder (15, 18, 21) durch das Fahrerassistenzsystem (2) aufgrund der Anwesenheit des Objektes in der Umgebung (10 bis 13) vorgenommen wird.

7. Verfahren nach einem der vorhergehenden Ansprüche,
**dadurch gekennzeichnet, dass**
das Kartenbild (21) um zumindest einen Bereich des Umgebungsbildes (15, 18) ergänzt wird.

8. Verfahren nach einem der vorhergehenden Ansprüche,
**dadurch gekennzeichnet, dass**
als Umgebungsbild (15, 18) nach einem vorbestimmten Wahlkriterium wahlweise ein erstes Umgebungsbild (15) oder ein zweites Umgebungsbild (18) erzeugt wird, wobei sich das erste und das zweite Umgebungsbild (15, 18) untereinander darin unterscheiden, dass das erste Umgebungsbild (15) den Umgebungsbereich (16) bis zu einer größeren Entfernung (17) vom Kraftfahrzeug (1) weg zeigt als das zweite Umgebungsbild (18).

9. Verfahren nach Anspruch 8,
**dadurch gekennzeichnet, dass**
das erste Umgebungsbild (15) den Umgebungsbereich (16) bis zu einer Entfernung (17) von dem Kraftfahrzeug (1) weg zeigt, welche in einem Wertebereich von 7 m bis 13 m liegt.

10. Verfahren nach Anspruch 8 oder 9,
**dadurch gekennzeichnet, dass**
das zweite Umgebungsbild (18) den Umgebungsbereich (19) bis zu einer Entfernung (20) von dem Kraftfahrzeug (1) weg zeigt, welche in einem Wertebereich von 50 cm bis 2 m liegt.

11. Verfahren nach einem der Ansprüche 8 bis 10,
**dadurch gekennzeichnet, dass**
das Wahlkriterium beinhaltet, dass unmittelbar nach dem Wechseln von dem Kartenbild (21) zum Umgebungsbild (15, 18) das erste Umgebungsbild (15) erzeugt wird.

12. Verfahren nach einem der Ansprüche 8 bis 11,
**dadurch gekennzeichnet, dass**
das Wahlkriterium beinhaltet, dass dann, wenn anhand der Navigationsdaten ein Ankommen des Kraftfahrzeugs (1) an einem Zielort durch das Fahrerassistenzsystem (2) festgestellt wird, das erste Umgebungsbild (15) erzeugt wird.

13. Verfahren nach einem der Ansprüche 8 bis 12,
**dadurch gekennzeichnet, dass**
das Wahlkriterium beinhaltet, dass dann, wenn durch eine Sensoreinrichtung des Fahrerassistenzsystems (2) ein fahrzeugexternes Objekt in der Umgebung (10 bis 13) des Kraftfahrzeugs (1) detektiert wird, das zweite Umgebungsbild (18) erzeugt wird.

14. Fahrerassistenzsystem (2) für ein Kraftfahrzeug (1), mit:
- einem Navigationsempfänger (14) zum Empfangen von Navigationsdaten,
- zumindest einem Sensor (5a bis 5d) zum Erfassen von Sensordaten über eine Umgebung (10 bis 13) des Kraftfahrzeugs (1), und
- einer Anzeigeeinrichtung (3) zum Anzeigen von Bildern,
- wobei das Fahrerassistenzsystem (2) dazu ausgelegt ist:
o die Sensordaten zu einem Umgebungsbild (15, 18) zu verarbeiten, welches zumindest einen Umgebungsbereich (16,19) neben dem Kraftfahrzeug (1') zeigt,
o ein Kartenbild (21) unter Berücksichtigung der Navigationsdaten aus gespeicherten Kartendaten zu erzeugen und das Kartenbild (21) auf der Anzeigeeinrichtung (3) anzuzeigen, und
o das Kartenbild (21) auf der Anzeigeeinrichtung (3) zu vergrößern und nach Erreichen eines vorbestimmten Abbildungsmaßstabs des Kartenbildes (21) von dem Kartenbild (21) zu dem Umgebungsbild (15, 18) zu wechseln,
**gekennzeichnet durch**
- zumindest eine Kamera (5a bis 5d) als einen Sensor, wobei die Sensordaten Bilddaten umfassen, welche **durch** die zumindest eine Kamera (5a bis 5d) erfasst werden,
- und **dadurch** gekennzeichnet, dass das Fahrerassistenzsystem (2) dazu ausgelegt ist:
o die Bilddaten zum Umgebungsbild (15, 18) zu verarbeitet, welches eine perspektivische Ansicht des Umgebungsbereichs (16, 19) und auch zumindest eines Bereichs des Kraftfahrzeugs (1') zeigt, und
o unmittelbar nach dem Wechseln von dem Kartenbild (21) zu dem Umgebungsbild (15, 18) das Umgebungsbild (15, 18) den Umgebungsbereich (16, 19), und auch den zumindest einen Bereich des Kraftfahrzeugs (1'), aus derselben Blickrichtung zu zeigen, wie das Kartenbild (21) unmittelbar vor dem Wechseln.

15. Kraftfahrzeug (1) mit einem Fahrerassistenzsystem (2) nach Anspruch 14.

## Claims

1. Method for displaying images (15, 18, 21) on a display device (3) of a driver assistance system (2) in a motor vehicle (1), having the steps:
- reception of navigation data by the driver assistance system (2),
- acquisition of sensor data about the surroundings (10 to 13) of the motor vehicle (1) by at least one sensor (5a to 5d) of the driver assistance system (2),
- processing of the sensor data to form a surroundings image (15, 18) which shows at least one surrounding area (16, 19) next to the motor vehicle (1),
- displaying of a map image (21) on the display device (3), which is generated while taking into account the navigation data from stored map data, and
- enlargement of the map image (21) on the display device (3), and changing from the map image (21) to the surroundings image (15, 18) after a predetermined mapping scale of the map image (21) has been reached,
- **characterized in that**
the sensor data comprises image data which is acquired by at least one camera (5a to 5d) as a sensor, wherein the image data is processed to form the surroundings image (15, 18) which shows a perspective view of the surrounding area (16, 19) and also of at least one area of the motor vehicle (1'), and **in that** immediately after the change from the map image (21) to the surroundings image (15, 18), the surroundings image (15, 18) shows the surrounding area (16, 19) and also the at least one area of the motor vehicle (1') from the same viewing direction as the map image (21) directly before the change.

2. Method according to Claim 1,
**characterized in that**
the sensor data comprises ultrasonic data which is acquired by at least one ultrasonic sensor, and/or radar data which is acquired by at least one radar device as a sensor, and/or laser data which is acquired by at least one laser scanner as a sensor.

3. Method according to one of the preceding claims,
**characterized in that**
the surroundings image (15, 18) from above the motor vehicle (1) shows a plan view of at least one area of the motor vehicle (1') and the surrounding area (16, 19), in particular a plan view of the entire motor vehicle (1') and the surrounding area (16, 19) around the motor vehicle (1).

4. Method according to one of the preceding claims,
**characterized in that**
the enlargement of the map image (21) and as a result the changing of the images (15, 18, 21) take place on the basis of an input which an operator makes at an input device of the driver assistance system (2).

5. Method according to one of the preceding claims,
**characterized in that**
on the basis of the navigation data the arrival of the motor vehicle (1) at a destination is determined by the driver assistance system (2), and the enlargement of the map image (21) and as a result the changing of the images (15, 18, 21) are performed by the driver assistance system (2) on the basis of this determination.

6. Method according to one of the preceding claims,
**characterized in that**
a sensor device of the driver assistance system (2) detects an object external to the vehicle in the surroundings (10 to 13), and the enlargement of the map image (21) and as a result the changing of the images (15, 18, 21) by the driver assistance system (2) are performed on the basis of the presence of the object in the surroundings (10 to 13).

7. Method according to one of the preceding claims,
**characterized in that**
the map image (21) is supplemented with at least one area of the surroundings images (15, 18).

8. Method according to one of the preceding claims,
**characterized in that**
either a first surroundings image (15) or a second surroundings image (18) is generated as a surroundings image (15, 18) according to a predetermined selection criterion, wherein the first and the second surroundings images (15, 18) differ from one another **in that** the first surroundings image (15) shows the surrounding area (16) up to a larger distance (17) away from the motor vehicle (1) than the second surroundings image (18).

9. Method according to Claim 8,
**characterized in that**
the first surroundings image (15) shows the surrounding area (16) up to a distance (17) away from the motor vehicle (1) in a value range from 7 m to 13 m.

10. Method according to Claim 8 or 9,
**characterized in that**
the second surroundings image (18) shows the surrounding area (19) up to a distance (20) away from the motor vehicle (1) in a value range from 50 cm to 2 m.

11. Method according to one of Claims 8 to 10,
**characterized in that**
the selection criterion includes the fact that the first surroundings image (15) is generated directly after the change from the map image (21) to the surroundings image (15, 18).

12. Method according to one of Claims 8 to 11,
**characterized in that**
the selection criterion includes the fact that the first surroundings image (15) is generated when the arrival of the motor vehicle (1) at a destination is determined by the driver assistance system (2) on the basis of the navigation data.

13. Method according to one of Claims 8 to 12,
**characterized in that**
the selection criterion includes the fact that the second surroundings image (18) is generated when an object external to the vehicle is detected in the surroundings (10 to 13) of the motor vehicle (1) by a sensor device of the driver assistance system (2).

14. Driver assistance system (2) for a motor vehicle (1), having:
- a navigation receiver (14) for receiving navigation data,
- at least one sensor (5a to 5d) for acquiring sensor data about the surroundings (10 to 13) of the motor vehicle (1), and
- a display device (3) for displaying images,
- wherein the driver assistance system (2) is configured:
• to process the sensor data to form a surroundings image (15, 18) which shows at least one surrounding area (16, 19) next to the motor vehicle (1'),
• to generate a map image (21) while taking into account the navigation data from stored map data, and to display the map image (21) on the display device (3), and
• to enlarge the map image (21) on the display device (3) and to change from the map image (21) to the surroundings image (15, 18) after a predetermined mapping scale of the map image (21) has been reached, **characterized by**
- at least one camera (5a to 5d) as a sensor, wherein the sensor data comprise image data which are acquired by the at least one camera (5a to 5d),
- and **characterized in that** the driver assistance system (2) is configured:
• to process the image data to form the surroundings image (15, 18) which shows a perspective view of the surrounding area (16, 19) and also shows at least one area of the motor vehicle (1'), and
• immediately after the change from the map image (21) to the surroundings image (15, 18), the surroundings image (15, 18), the surrounding area (16, 19) and also the at least one area of the motor vehicle (1') from the same viewing direction as the map image (21) directly before the change.

15. Motor vehicle (1) having a driver assistance system (2) according to Claim 14.

## Revendications

1. Procédé pour l'affichage d'images (15, 18, 21) sur un dispositif d'affichage (3) d'un système d'assistance à la conduite (2) dans un véhicule automobile (1), comportant les étapes consistant à :
- recevoir des données de navigation par l'intermédiaire du système d'assistance à la conduite (2),
- détecter des données de capteur concernant un environnement (10 à 13) du véhicule automobile (1) au moyen d'au moins un capteur (5a à 5d) du système d'assistance à la conduite (2),
- traiter les données de capteur pour obtenir une image de l'environnement (15, 18) qui affiche au moins une zone environnante (16, 19) adjacente au véhicule automobile (1),
- afficher sur le dispositif d'affichage (3) une image de carte (21) qui est générée en tenant compte des données de navigation à partir de données de carte stockées, et
- agrandir l'image de carte (21) sur le dispositif d'affichage (3) et, après qu'une échelle de formation d'image prédéterminée de l'image de carte (21) a été atteinte, basculer de l'image de carte (21) à l'image de l'environnement (15, 18),
- **caractérisé en ce que**
les données de capteur comprennent des données d'images qui sont détectées au moyen d'au moins une caméra (5a à 5d) en tant que capteur, dans lequel les données d'images sont traitées pour obtenir une image de l'environnement (15, 18) qui affiche une vue en perspective de la zone environnante (16, 19) ainsi qu'au moins une zone du véhicule automobile (1'), et **en ce que**, immédiatement après le basculement de l'image de carte (21) à l'image de l'environnement (15, 18), l'image de l'environnement (15, 18) affiche la zone environnante (16, 19) ainsi que l'au moins une zone du véhicule automobile (1') dans la direction de visée de celui-ci, ainsi que l'image de carte (21) immédiatement avant le basculement.

2. Procédé selon la revendication 1, **caractérisé en ce que** les données de capteur comprennent des données ultrasonores qui sont détectées au moyen d'au moins un capteur à ultrasons, et/ou des données radar qui sont détectées au moyen d'au moins un appareil à radar en tant que capteur, et/ou des données laser qui sont détectées au moyen d'au moins un dispositif de balayage à laser en tant que capteur.

3. Procédé selon l'une quelconque des revendications précédentes, **caractérisé en ce que** l'image de l'environnement (15, 18) affiche une vue de dessus du véhicule automobile (1) sur au moins une zone du véhicule automobile (1') et la zone environnante (16, 19), notamment une vue de dessus de l'ensemble du véhicule automobile (1') et de la zone environnante (16, 19) entourant le véhicule automobile (1).

4. Procédé selon l'une quelconque des revendications précédentes, **caractérisé en ce que** l'agrandissement de l'image de carte (21) et par conséquent le basculement entre les images (15, 18, 21) s'effectue sur la base d'une entrée qu'effectue un utilisateur sur un dispositif d'entrée du système d'assistance à la conduite (2).

5. Procédé selon l'une quelconque des revendications précédentes, **caractérisé en ce que**, sur la base des données de navigation, une arrivée du véhicule automobile (1) en un lieu cible est déterminée au moyen du système d'assistance à la conduite (2) et l'agrandissement de l'image de carte (21) et par conséquent le basculement entre les images (15, 18, 21) sont effectués par l'intermédiaire du système d'assistance à la conduite (2) sur la base de cette détermination.

6. Procédé selon l'une quelconque des revendications précédentes, **caractérisé en ce qu'**un objet extérieur au véhicule se trouvant dans l'environnement (10 à 13) est détecté au moyen d'un dispositif de détection du système d'assistance à la conduite (2) et l'agrandissement de l'image de carte (21) et par conséquent le basculement entre les images (15, 18, 21) sont effectués par l'intermédiaire du système d'assistance à la conduite (2) sur la base de la présence de l'objet dans l'environnement (10 à 13).

7. Procédé selon l'une quelconque des revendications précédentes, **caractérisé en ce que** l'image de carte (21) est complétée par au moins une zone de l'image de l'environnement (15, 18).

8. Procédé selon l'une quelconque des revendications précédentes, **caractérisé en ce que**, en tant qu'image de l'environnement (15, 18), conformément à un critère de sélection prédéterminé, une première image de l'environnement (15) ou une seconde image de l'environnement (18) est générée de manière sélectionnée, dans lequel les première et seconde images de l'environnement (15, 18) se différencient l'une de l'autre par le fait que la première image de l'environnement (15) affiche la zone environnante (16) jusqu'à une distance plus importante (17) du véhicule automobile (1) que la seconde image de l'environnement (18).

9. Procédé selon la revendication 8, **caractérisé en ce que** la première image de l'environnement (15) affiche la zone environnante (16) jusqu'à une distance (17) du véhicule automobile (1) qui se situe dans un domaine de valeurs de 7 m à 13 m.

10. Procédé selon la revendication 8 ou 9, **caractérisé en ce que** la seconde image de l'environnement (18) affiche la zone environnante (19) jusqu'à une distance (20) du véhicule automobile (1) qui se situe dans un domaine de valeurs de 50 cm à 2 m.

11. Procédé selon l'une quelconque des revendications 8 à 10, **caractérisé en ce que** le critère de sélection comprend le fait que la première image de l'environnement (15) est générée immédiatement après le basculement de l'image de carte (21) à l'image de l'environnement (15, 18).

12. Procédé selon l'une quelconque des revendications 8 à 11, **caractérisé en ce que** le critère de sélection comprend le fait que dès qu'une arrivée du véhicule automobile (1) à un emplacement cible a été déterminée sur la base des données de navigation au moyen du système d'assistance à la conduite (2), la première image de l'environnement (15) est générée.

13. Procédé selon l'une quelconque des revendications 8 à 12, **caractérisé en ce que** le critère de sélection comprend le fait que dès qu'un objet extérieur au véhicule est détecté dans l'environnement (10 à 13) du véhicule automobile (1) au moyen d'un dispositif de détection du système d'assistance à la conduite (2), la seconde image de l'environnement (18) est générée.

14. Système d'assistance à la conduite (2) destiné à un véhicule automobile (1), comportant :
- un récepteur de navigation (14) destiné à recevoir des données de navigation,
- au moins un capteur (5a à 5d) destiné à détecter des données de capteur concernant un environnement (10 à 13) du véhicule automobile (1), et
- un dispositif d'affichage (3) destiné à afficher des images,
- dans lequel le système d'assistance à la conduite (2) est conçu pour :
o traiter les données de capteur afin d'obtenir une image de l'environnement (15, 18) qui affiche au moins une zone environnante (16, 19) adjacente au véhicule automobile (1'),
o générer une image de carte (21) en tenant compte des données de navigation à partir de données de carte stockées et afficher l'image de carte (21) sur le dispositif d'affichage (3), et
o agrandir l'image de carte (21) sur le dispositif d'affichage (3) et effectuer un basculement de l'image de carte (21) à l'image de l'environnement (15, 18) après qu'une échelle de formation d'image prédéterminée de l'image de carte (21) a été atteinte,
**caractérisé par**
- au moins une caméra (5a à 5d) en tant que capteur, dans lequel les données de capteur comprennent des données d'images qui sont détectées au moyen de l'au moins une caméra (5a, à 5d),
- et **caractérisé en ce que** le système d'assistance à la conduite (2) est conçu pour :
o traiter les données d'image afin d'obtenir une image de l'environnement (15, 18) qui affiche une vue en perspective de la zone environnante (16, 19) ainsi qu'au moins une zone du véhicule automobile (1'), et
o immédiatement après le basculement de l'image de carte (21) à l'image de l'environnement (15, 18), afficher l'image de l'environnement (15, 18), la zone environnante (16, 19), ainsi qu'au moins une zone du véhicule automobile (1') dans la direction de visée de celui-ci, ainsi que l'image de carte (21) immédiatement avant le basculement.

15. Véhicule automobile (1) comportant un système d'assistance à la conduite (2) selon la revendication 14.
